# EUROPÄISCHE PATENTSCHRIFT

(11) **EP 2 799 284 B1**
(45) Veröffentlichungstag und Bekanntmachung des Hinweises auf die Patenterteilung: **21.02.2018**
(21) Anmeldenummer: 14163005.3
(22) Anmeldetag: 05.04.2011
(51) Int. Cl.: B60P 3/40, F03D 1/00

(54) **Transportfahrzeug für Windenergieanlagen-Rotorblätter und/oder Turmsegmente und Transportgestell für ein Transportfahrzeug**
Transport vehicle for rotor blades and/or tower segments of wind power plants and transport rack for a transport vehicle
Vehicule de transport pour pales de rotor et/ou de segments de tour d'eolienne, et bati de transport pour un tel vehicule de transport

(30) Priorität: 07.04.2010 DE 102010003694; 21.10.2010 DE 102010042783
(43) Veröffentlichungstag der Anmeldung: 05.11.2014
(62) Teilanmeldung aus: 11712550.0
(73) Patentinhaber: Wobben Properties GmbH, 26607 Aurich (DE)
(72) Erfinder: Ressel, Dirk, 26629 Großefehn (DE); Lülker, Frank, 26603 Aurich (DE); Janke, Mirko, 10439 Berlin (DE)
(74) Vertreter: Eisenführ Speiser

(56) Entgegenhaltungen:
- WO-A1-2004/041589
- WO-A1-2007/147413
- DE-U1-202009 012 068
- JP-A- 2004 243 805

## Beschreibung

Die vorliegende Erfindung betrifft ein Transportfahrzeug, insbesondere für Windenergieanlagen-Rotorblätter und/oder Turmsegmente.

WO 03/057528 A1 zeigt ein Transportfahrzeug für ein Rotorblatt einer Windenergieanlage. Das Transportfahrzeug weist eine Zugmaschine und einen Nachläufer auf. Die Zugmaschine und der Nachläufer werden während des Transportes durch das Rotorblatt selbst miteinander verbunden. Hierbei ist das Rotorblatt drehbar sowohl an der Zugmaschine als auch an dem Nachläufer gelagert, so dass eine Drehung um die Längsachse des Rotorblattes ermöglicht wird.
DE 20 2009 012 068 U1 zeigt ein Transportfahrzeug für Rotorblätter, wobei die Rotorblätter um eine Schwenkachse verschwenkbar sind.
Als weiterer Stand der Technik sei auf die DE 199 38 017 A1, WO 2008/104185 A1 und WO 2004/041589 A1 hingewiesen.
Es ist eine Aufgabe der vorliegenden Erfindung, ein Transportfahrzeug insbesondere für Windenergieanlagen-Rotorblätter und/oder Turmsegmente vorzusehen, welches einen flexibleren Transport ermöglicht.

Diese Aufgabe wird durch ein Transportfahrzeug nach Anspruch 1 gelöst.
Somit wird ein Transportfahrzeug zum Transport von Windenergieanlagen-Rotorblättern und/oder Turmsegmenten vorgesehen. Das Transportfahrzeug weist ein Transportgestell mit einem Grundrahmen, einem mit dem Grundrahmen in einem ersten Winkel fest verbundenen Aufnahmerahmen und eine Dreh-Verstelleinheit auf, welche mit einem Ende an dem Aufnahmerahmen befestigt ist und an ihrem zweiten Ende einen Blattadapter zur Aufnahme eines Rotorblattes oder eines Turmsegmentes aufweist. Der Grundrahmen spannt eine Grundebene auf. Die Dreh-Verstelleinheit weist mindestens ein erstes Drehlager auf, die Dreh-Verstelleinheit mindestens ein erstes Drehlager zwischen dem ersten und zweiten Ende aufweist,wobei das Drehlager relativ zum Aufnahmerahmen drehbar ist und in einem Winkel zu der Grundebene vorgesehen ist,wobei die Dreh-Verstelleinheit durch Drehen des ersten Drehlagers in einer ersten Position verfahrbar ist, so dass das zweite Ende der Dreh-Verstelleinheit in einer ersten Ebene ist, welche im Wesentlichen senkrecht zur Grundebene ist,wobei die Dreh-Verstelleinheit in eine zweite Position durch Drehen des ersten Drehlagers verfahrbar ist, so dass das zweite Ende der Dreh-Verstelleinheit sich in einer zweiten Ebene befindet, die nicht senkrecht zu der Grundebene ist. Durch die spezielle Ausgestaltung der Dreh-Verstelleinheit (insbesondere durch den Winkel zwischen der ersten und zweiten Drehebene) kann durch eine Drehung des ersten und zweiten Drehlagers ein an dem Blattadapter befestigtes Rotorblatt oder Turmsegment sowohl um seine Längsachse herum gedreht werden als auch derart gedreht werden, dass ein Winkel zwischen dem Transportgestell und dem Rotorblatt bzw. dem Turmsegment vorhanden ist. Somit kann der Winkel zwischen dem Transportgestell und dem Rotorblatt bzw. dem Turmsegment durch Drehen des ersten und zweiten Drehlagers verstellt werden.
Gemäß einem weiteren Aspekt der vorliegenden Erfindung weist die Dreh-Verstelleinheit ein zweites Drehlager auf. Zwischen dem ersten und zweiten Drehlager ist ein erster Abschnitt vorgesehen. Zwischen dem zweiten Drehlager und dem Blattadapter ist ein zweiter Abschnitt der Dreh-Verstelleinheit vorgesehen.

Gemäß einem weiteren Aspekt der vorliegenden Erfindung weist der erste und zweite Abschnitt der Dreh-Verstelleinheit jeweils ein erstes und zweites Ende auf. Die ersten Enden des ersten und zweiten Abschnittes sind dabei kürzer ausgestaltet als die zweiten Enden. Durch diese Ausgestaltung des ersten und zweiten Abschnitts der Dreh-Verstelleinheit, welche über das zweite Drehlager miteinander verbunden sind, kann es zu einer Verstellung des Winkels zwischen dem Transportgestell und dem Rotorblatt kommen, wenn das erste und zweite Drehlager entsprechend gedreht wird.

Gemäß einem weiteren Aspekt der vorliegenden Erfindung weist die Drehverstelleinheit ein zweites Drehlager auf, wobei zwischen dem ersten und zweiten Drehlager ein erster Abschnitt vorgesehen ist und wobei zwischen dem ersten Drehlager und dem Blattadapter ein zweiter Abschnitt vorgesehen ist.

Gemäß einem weiteren Aspekt der vorliegenden Erfindung ist in einem ersten Betriebszustand das erste Drehlager derart eingestellt, dass das erste Ende des ersten Abschnittes nach unten weist und das zweite Drehlager ist derart eingestellt, dass ihr zweites Ende nach unten zeigt. In dem ersten Betriebszustand ist somit die Ebene des Blattadapters im Wesentlichen parallel zu der Ebene des ersten Drehlagers. Somit ist der Winkel zwischen dem Rotorblatt und dem Transportgestell in dem ersten Betriebszustand im Wesentlichen Null. In einem zweiten Betriebszustand ist das erste Drehlager derart eingestellt, dass das zweite Ende des ersten Abschnittes nach unten zeigt und das zweite Drehlager ist derart eingestellt, dass sein zweites Ende nach unten zeigt. In einem derartigen Abschnitt ist ein Winkel zwischen der ersten Drehebene und der Ebene des Blattadapters vorgesehen. Damit ist auch ein Winkel zwischen dem Rotorblatt und dem Transportgestell vorhanden, welcher größer als Null ist.

Ein nicht beanspruchter Aspekt betrifft ebenfalls ein Transportfahrzeug zum Transport von Windenergieanlagen-Rotorblättern und Turmsegmenten. Das Transportfahrzeug weist ein Transportgestell mit einem Grundrahmen und einen mit dem Grundrahmen schwenkbar verbundenen Kippstuhl auf. Der Kippstuhl weist eine erste und zweite Seite auf. Das Transportfahrzeug weist ferner mindestens einen Hydraulikzylinder oder anderen längsverstellbaren Zug-/Druckstab zwischen dem Grundrahmen und der ersten Seite des Kippstuhls auf. Ferner ist ein Blattadapter zur Aufnahme eines Windenergieanlagen-Rotorblattes oder eines Turmsegmentes vorgesehen. Der Blattadapter wird an der ersten oder der zweiten Seite des Kippstuhls angeordnet.

Gemäß einem nicht beanspruchten Aspekt der vorliegenden Erfindung weist der Grundrahmen an einer Seite mindestens eine Hebeeinheit zum Anheben bzw. Verkippen des Grundrahmens auf.

Gemäß einem nicht beanspruchten Aspekt der vorliegenden Erfindung weist der Grundrahmen zwei Anschlagblöcke auf, welche ein Verschwenken des Kippstuhls zumindest in eine Richtung begrenzen.

Gemäß einem nicht beanspruchten Aspekt der vorliegenden Erfindung ist der Blattadapter auf der zweiten Seite des Kippstuhls angeordnet.

Gemäß einem nicht beanspruchten Aspekt der vorliegenden Erfindung weist das Transportfahrzeug einen Auflieger auf, auf welchem das Transportgestell befestigt ist. Die erste Seite des Kippstuhls ist in Fahrtrichtung oder entgegen der Fahrtrichtung vorgesehen.

Gemäß einem nicht beanspruchten Aspekt der vorliegenden Erfindung ist der Blattadapter auf der zweiten Seite des Kippstuhls vorgesehen. Der mindestens eine Hydraulikzylinder ist auf der ersten Seite des Kippstuhls angeordnet. Der Hydraulikzylinder bringt zum Verschwenken des Kippstuhls eine Zugkraft auf.

Ein nicht beanspruchter Aspekt betrifft ebenfalls ein Transportgestell zum Transport eines Windenergieanlagen-Rotorblattes oder eines Turmsegments. Das Transportgestellt weist einen Grundrahmen, einen mit dem Grundrahmen verschwenkbar verbundenen Kippstuhl, mindestens einen Hydraulikzylinder, welcher mit dem Grundrahmen und der ersten Seite des Kippstuhls verbunden ist, und einen Blattadapter zur Aufnahme des Windenergieanlagen-Rotorblattes oder des Turmsegmentes auf, der an der ersten oder zweiten Seite des Kippstuhls vorgesehen ist.

Die Erfindung betrifft den Gedanken, ein Transportfahrzeug mit einem Transportgestell vorzusehen, das ein Schwenken erlaubt, so dass das Rotorblatt um einen Winkel α gekippt bzw. geneigt wird bzw. zu neigen ist. Das Transportgestell kann dabei optional sowohl im vorderen Bereich des Transportfahrzeuges oder im hinteren Bereich angeordnet werden. Wenn das Transportgestell im vorderen Bereich angeordnet wird, dann wird das Rotorblatt nach hinten über das Transportfahrzeug hinausragen. Wenn das Transportgestell jedoch im hinteren Bereich des Transportfahrzeuges angeordnet ist, dann wird das Rotorblatt das Transportfahrzeug nach vorne überragen. Optional kann das Verschwenken des Transportgestells durch Hydraulikzylinder erfolgen. Die Hydraulikzylinder können entweder auf Druck oder auch Zug belastet werden.

Optional kann das Transportgestell auf dem Transportfahrzeug oder einem Anhänger des Transportfahrzeuges auf einer Seite mit mindestens einem Hydraulikzylinder vorgesehen werden, um ein leichtes Ankippen des Transportgestells zu ermöglichen. Dies ist vorteilhaft, damit das Lochbild eines Flansches zur Aufnahme des Rotorblattes mit dem Flansch des Rotorblattes übereinstimmt und das Rotorblatt montiert werden kann. Dies kann aber auch durch die Verwendung eines Drehantriebes (für den Blattadapter) um die Längsachse des Rotorblattes erreicht werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung eines Transportfahrzeugs gemäß einem ersten Ausführungsbeispiel,
- Fig. 2: zeigt eine schematische Darstellung eines Transportfahrzeugs gemäß einem zweiten Ausführungsbeispiel,
- Fig. 3: zeigt eine schematische Darstellung eines Transportfahrzeugs gemäß einem dritten Ausführungsbeispiel,
- Fig. 4: zeigt eine perspektivische Darstellung einer Adaptereinheit gemäß einem vierten Ausführungsbeispiel,
- Fig. 5A: zeigt eine Draufsicht auf eine Adaptereinheit,
- Fig. 5B: zeigt eine Seitenansicht einer Adaptereinheit gemäß einem fünften Ausführungsbeispiel,
- Fig. 6: zeigt eine perspektivische Darstellung eines Grundrahmens eines Transportgestells gemäß einem sechsten Ausführungsbeispiel,
- Fig. 7: zeigt eine Hydraulikeinheit für eine Adaptereinheit gemäß einem siebten Ausführungsbeispiel,
- Fig. 8: zeigt verschiedene Ausgestaltungen einer Adaptereinheit gemäß einem achten Ausführungsbeispiel,
- Fig. 9: zeigt eine perspektivische Darstellung eines Teils einer Adaptereinheit gemäß einem neunten Ausführungsbeispiel,
- Fig. 10: zeigt eine perspektivische Darstellung eines Teils einer Adaptereinheit gemäß einem zehnten Ausführungsbeispiel,
- Fig. 11: zeigt eine Seitenansicht eines Teils einer Adaptereinheit gemäß einem elften Ausführungsbeispiel,
- Fig. 12: zeigt eine perspektivische Ansicht eines Transportgestells gemäß einem zwölften Ausführungsbeispiel,
- Fig. 13A-13C: zeigen verschiedene Ansichten eines Transportgestells gemäß einem dreizehnten Ausführungsbeispiel,
- Fig. 14: zeigt eine perspektivische Ansicht eines Transportgestells gemäß einem vierzehnten Ausführungsbeispiel,
- Fig. 15: zeigt eine perspektivische Ansicht eines Transportsystems gemäß dem fünfzehnten Ausführungsbeispiel mit einem Rotorblatt einer Windenergieanlage,
- Fig. 16: zeigt eine perspektivische Teilansicht des Transportgestells gemäß einem sechzehnten Ausführungsbeispiel,
- Fig. 17A und: 17B zeigen jeweils eine schematische Ansicht eines Transportgestells gemäß einem siebzehnten Ausführungsbeispiel,
- Figur 18: zeigt eine schematische Darstellung eines Transportgestells gemäß einem achtzehnten Ausführungsbeispiel, und
- Fig. 19: zeigt eine schematische Darstellung eines Transportgestells gemäß einem neunzehnten Ausführungsbeispiel.

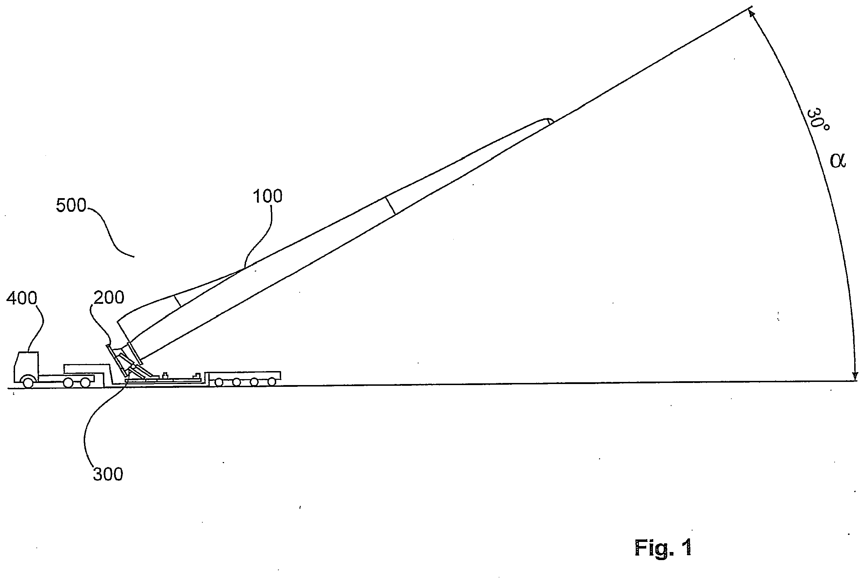

Fig. 1 zeigt eine schematische Darstellung eines Transportfahrzeugs gemäß einem ersten Ausführungsbeispiel. Das Transportfahrzeug weist beispielsweise einen LKW 400 sowie beispielsweise einen (Sattel-) Auflieger 300 auf. Auf dem (Sattel-) Auflieger wird ein Transportgestell 200 befestigt, das zur Aufnahme eines Rotorblatts 100 oder eines Turmsegmentes dient. Durch Verschwenken bzw. Kippen eines Teils des Transportgestells kann das Rotorblatt 100 ebenfalls gekippt werden.

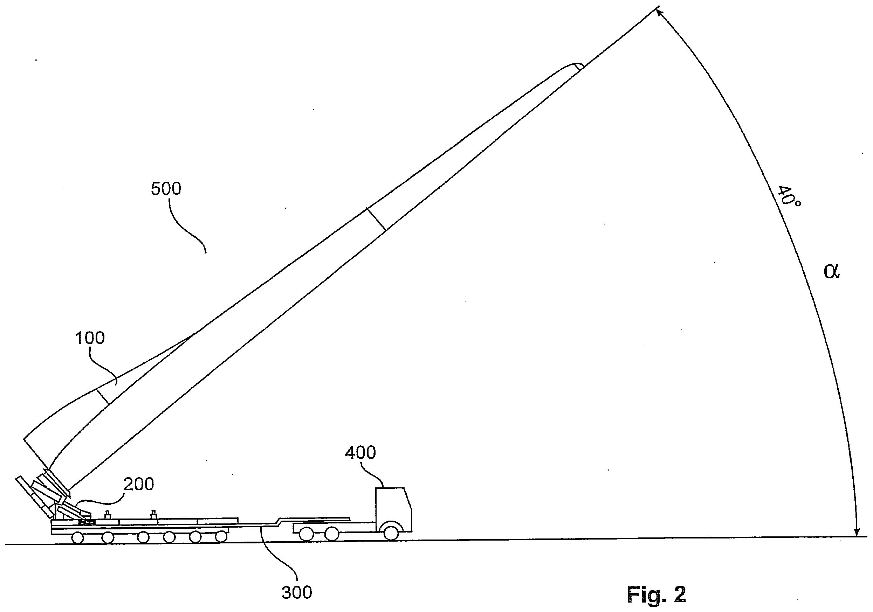

Fig. 2 zeigt eine schematische Darstellung eines Transportfahrzeugs gemäß dem zweiten Ausführungsbeispiel. Das Transportfahrzeug weist einen LKW 400 sowie beispielsweise einen Sattelauflieger auf. Auf dem Sattelauflieger wird ein Transportgestell 200 befestigt.

Ein Teil des Gestells ist verschwenkbar ausgestaltet und dient dazu, ein Rotorblatt 100 aufzunehmen.

In der in Fig. 1 gezeigten Lösung ragt die Spitze des Rotorblattes nach hinten über das Transportfahrzeug hinweg. In der in Fig. 2 gezeigten Lösung ragt die Spitze des Rotorblattes über den LKW 400 nach vorne hinweg.

Die in Fig. 1 gezeigte Lösung ermöglicht ein Verschwenken bzw. Kippen des Rotorblattes um den Winkel *α*, beispielsweise 30°. Das Transportgestell gemäß dem zweiten Ausführungsbeispiel ermöglicht ein Verkippen des Rotorblattes um *α* (bis 40°).

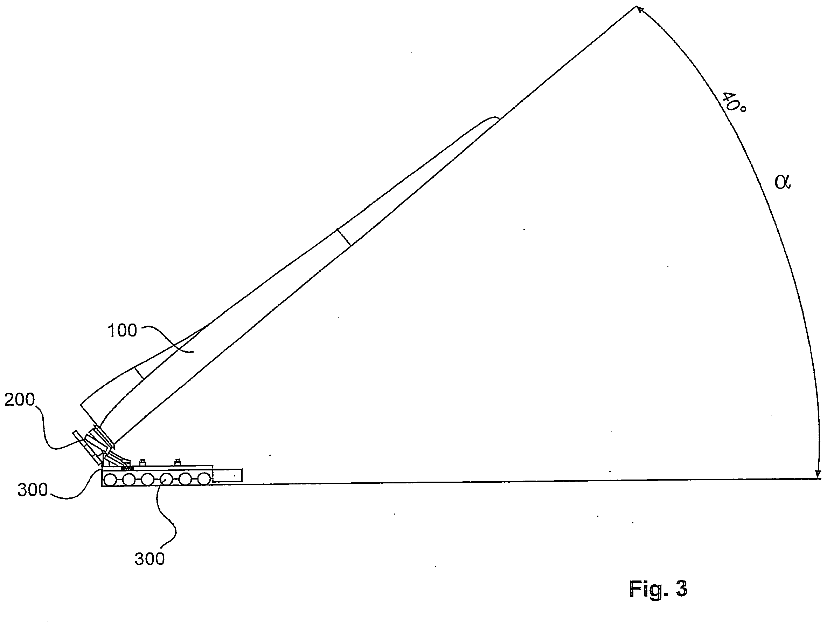

Fig. 3 zeigt eine schematische Darstellung eines Transportfahrsystems gemäß einem dritten Ausführungsbeispiel. Während das Transportsystem gemäß dem ersten und zweiten Ausführungsbeispiel jeweils einen LKW aufweist, ist das Transportsystem gemäß dem dritten Ausführungsbeispiel ohne LKW implementiert und kann ein selbstfahrendes Fahrzeug darstellen. Das Transportsystem weist damit einen Sattelauflieger 300 und ein schwenkbares Transportgestell auf. Das Rotorblatt wird dabei in den schwenkbaren Teil des Transportgestells montiert.

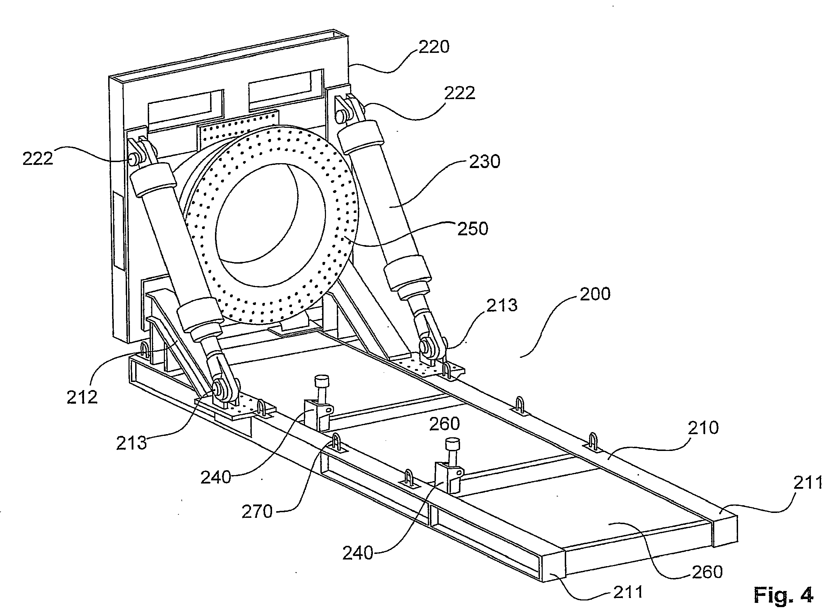

Fig. 4 zeigt eine perspektivische Ansicht eines Transportgestells gemäß einem vierten Ausführungsbeispiel. Das Transportgestell 200 weist einen ersten Abschnitt bzw. einen Grundrahmen 210 und einen zweiten Abschnitt bzw. einen Kippstuhl 220 auf, wobei der zweite Abschnitt 220 verschwenkbar bzw. drehbar mit dem ersten Abschnitt 210 verbunden ist. Hydraulikzylinder 230 können zwischen dem ersten und zweiten Abschnitt 210, 220 vorgesehen werden. Mittels dieser Hydraulikzylinder kann ein Verschwenken des zweiten Teils bzw. des Kippstuhls 220 ermöglicht werden.

Der Grundrahmen 210 weist zwei im Wesentlichen parallele Streben bzw. Hauptträger 211 auf, welche zur Aufnahme von Gewichten 260 dienen können. An einer Seite des Grundrahmens 210 sind mehrere Hydraulikzylinder 240 optional vorgesehen. Mit diesen Hydraulikzylindern kann ein Kippen des gesamten Transportgestells ermöglicht werden. Dies ist vorteilhaft, um das Lochbild der Löcher in dem Rotorblatt-Wurzelbereich in Einklang zu bringen mit den Löchern in einem Blattadapter 250, der an dem zweiten Teil 220 befestigt ist.

Zum Transport des Transportgestells können Ösen 270 vorgesehen werden.

Die Hydraulikzylinder 230 können an einem Befestigungspunkt 213 an dem ersten Teil 210 und einem zweiten Befestigungspunkt 220 an dem zweiten Teil 220 des Transportgestells befestigt werden. Durch Ausfahren und Einziehen der Hydraulikzylinder kann der Winkel zwischen dem Grundrahmen 210 und dem Kippstuhl 210, 220 variiert werden.

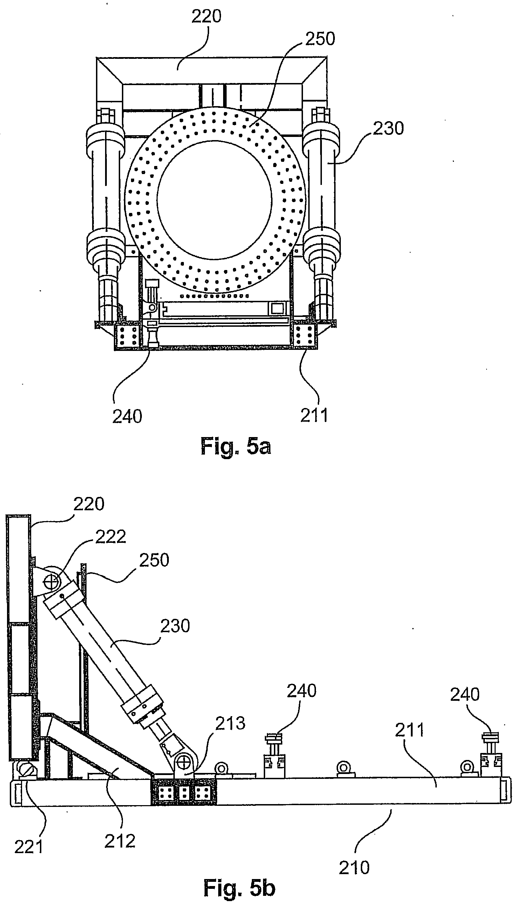

Fig. 5A zeigt eine Draufsicht und Fig. 5B zeigt eine Seitenansicht eines Transportgestells gemäß einem fünften Ausführungsbeispiel. Das Transportgestell 200 weist einen ersten und zweiten Abschnitt (Grundrahmen, Kippstuhl) 210, 220 auf, welche jeweils über ein Schwenklager 221 miteinander schwenkbar bzw. drehbar verbunden sind. Der erste Abschnitt (Grundrahmen) 210 weist mehrere Hydraulikzylinder 240 auf, welche zum Verkippen des Transportgestells bei Montage des Rotorblattes verwendet werden. Die beiden Hydraulikzylinder 230 werden an dem Lager 213 an dem ersten Abschnitt 210 und dem Lager 222 an dem zweiten Abschnitt vorgesehen.

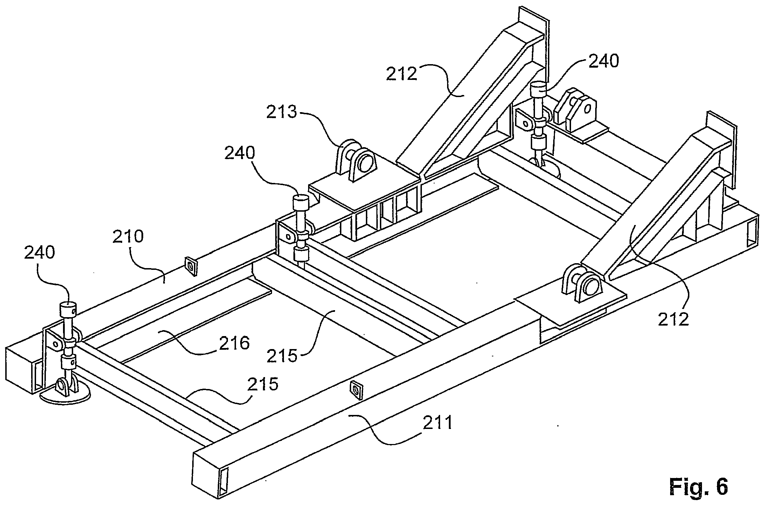

Fig. 6 zeigt eine perspektivische Ansicht eines Grundrahmens eines Transportgestells gemäß dem sechsten Ausführungsbeispiel. Der Grundrahmen 210 kann beispielsweise aus IPB-Profilträgern aufgebaut werden. Dieser Rahmen 210 weist dabei zwei Hauptträger 211 sowie mehrere Querträger 215 auf. Der Grundrahmen 210 weist ebenfalls zwei Anschlagblöcke 212 auf. Die Anschlagblöcke 212 dienen dazu, dass bei einem Abfall des Hydraulikdruckes in den Hydraulikzylindern das Rotorblatt nur bis zu einem definierten Punkt absinken kann. Zur Aufnahme der Hydraulikzylinder sind Lager 213 vorgesehen. Die Hydraulikzylinder 240 dienen dazu, ein leichtes Kippen des Grundrahmens zu erzeugen, damit ein Rotorblatt besser an dem Transportgestell montiert werden kann.

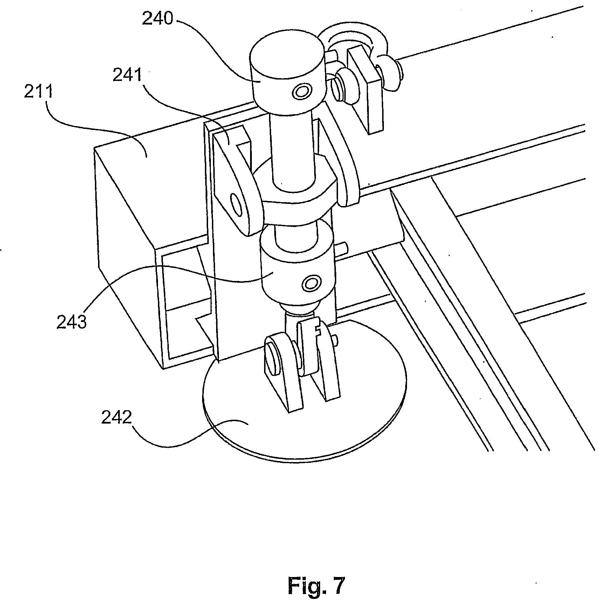

Fig. 7 zeigt eine perspektivische Ansicht einer Hebevorrichtung eines Transportgestells gemäß dem siebten Ausführungsbeispiel. Die Hebevorrichtung 240 ist mit den Hauptträgern verbunden und kann mittels eines Fußes 242 beispielsweise auf einem Sattelauflieger aufliegen und ein Verkippen des Grundrahmens bewirken. Die Hebevorrichtung ist insbesondere dazu geeignet, das Transportgestellt um bis zu 10° gegenüber dem Transportfahrzeug zu kippen.

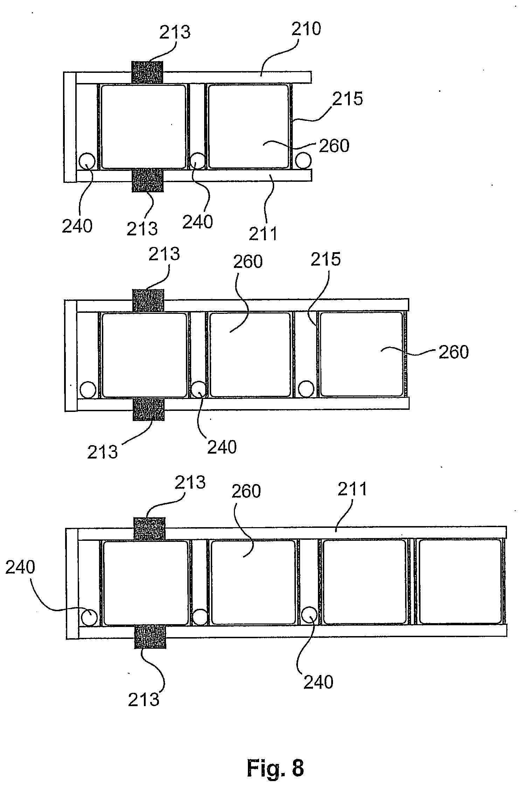

Fig. 8 zeigt eine schematische Ansicht eines Transportgestells gemäß dem achten Ausführungsbeispiel. Hierbei ist das Transportgestell insbesondere modular ausgestaltet, so dass verschiedene Module an einem Grundrahmen befestigt werden können und das Transportgestell somit in seiner Länge variiert werden kann. Damit kann eine Anpassung des Transportgestells an die jeweilige Ladeabmessung des Transportfahrzeuges angepasst werden. Zur Erhöhung der Kippsicherheit können Gewichte 260 vorgesehen werden. In dem oberen Bild ist ein Grundgestell für einen Sattelauflieger mit Tiefbett gezeigt. In dem mittleren Bild ist ein Grundgestell sowie eine Verlängerung gezeigt. In dem unteren Bild sind zwei Grundgestelle sowie zwei Verlängerungen gezeigt. Durch den modularen Aufbau des Transportgestells kann das Transportgestell an jeden beliebigen Fahrzeugtyp angepasst werden.

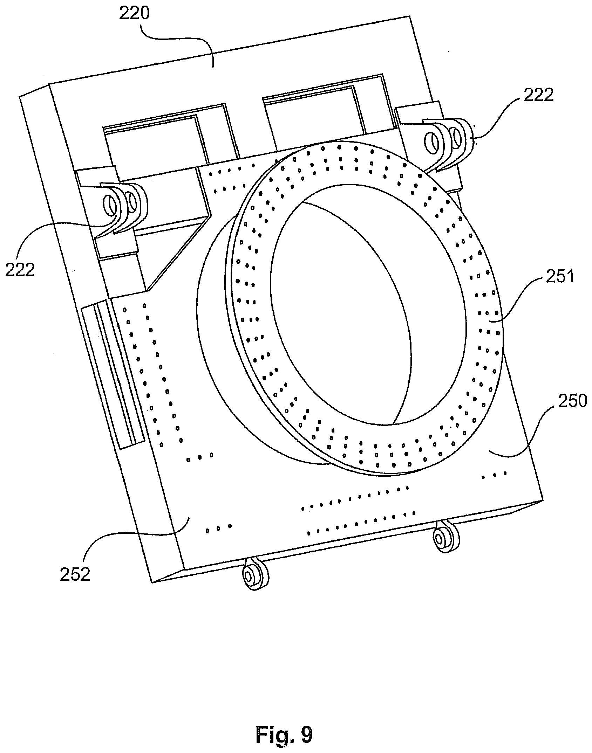

Fig. 9 zeigt eine perspektivische Ansicht eines Kippstuhls eines Transportgestells gemäß einem neunten Ausführungsbeispiel. Der Kippstuhl 220 kann dabei dem zweiten Abschnitt gemäß einem der vorherigen Ausführungsbeispiele entsprechen. Der Kippstuhl 220 ist dabei vorzugsweise schwenkbar an dem ersten Abschnitt (Grundrahmen) des Transportgestells befestigt. Der Kippstuhl 220 kann beispielsweise aus einem Rahmen bestehend aus IPB-Profilträgern hergestellt werden. Der Kippstuhl 220 kann einen Adapter 251 mit einer Vielzahl von kreisförmig angeordneten Löchern aufweisen, wobei der Durchmesser der Kreise unterschiedlich sein kann. Ferner können unterschiedliche Lochkreise an sich vorgesehen werden.

Somit können auch unterschiedliche Rotorblätter mit unterschiedlichen Durchmessern an dem Adapter befestigt werden.

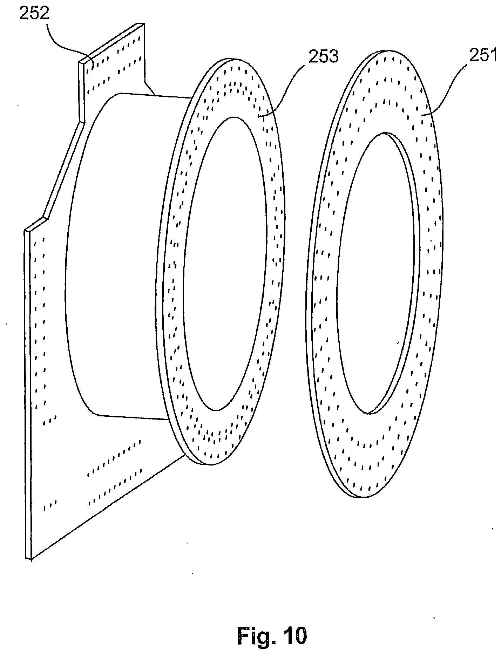

Fig. 10 zeigt eine perspektivische Darstellung des Blattadapters und einer Adapterplatte für ein Transportgestellt gemäß dem zehnten Ausführungsbeispiel. Hierbei kann das Transportgestell gemäß dem zehnten Ausführungsbeispiel insbesondere dem Transportgestell gemäß dem neunten Ausführungsbeispiel entsprechen. Alternativ dazu kann aber auch das Transportgestell gemäß dem zehnten Ausführungsbeispiel einem der Transportgestelle gemäß dem ersten bis neunten Ausführungsbeispiel entsprechen. Durch das Vorsehen der Adapterplatte 251 kann eine Vielzahl von Rotorblättern mit unterschiedlichem Durchmesser an dem Rotorblattwurzelbereich montiert werden.

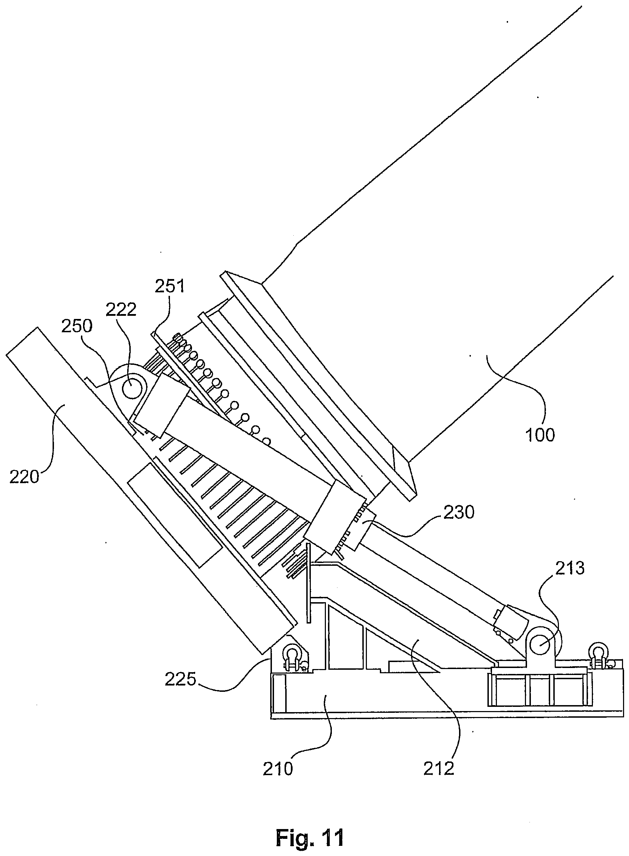

Fig. 11 zeigt eine schematische Draufsicht auf einen Ausschnitt einer Adaptereinheit gemäß dem zehnten Ausführungsbeispiel. Hierbei kann die Adaptereinheit gemäß dem zehnten Ausführungsbeispiel auf einem Transportgestell gemäß einem der Ausführungsbeispiele 1 bis 10 basieren. Ein Kippstuhl 220 ist über ein Schwenklager 225 mit einem Grundrahmen 210 verbunden. Der Grundrahmen 210 weist zwei Anschlagblöcke 212 auf. Ein Hydraulikzylinder ist an einem ersten Lager 213 an dem Grundrahmen 210 und einem zweiten Lager 222 an dem Kippstuhl 220 befestigt. Ein Rotorblatt 100 ist an der Adapterplatte 251 befestigt. Durch Aus- oder Einfahren des Hydraulikzylinders 230 kann der Kippstuhl 220 verschwenkt werden. Durch den großen Hebelarm und das Gewicht des Rotorblattes entsteht ein großes Drehmoment am Drehpunkt des Kippstuhls. Vorzugsweise werden zwei Zylinder parallel nebeneinander angeordnet, um ein gleichmäßiges Schwenken des Kippstuhls sicherzustellen. Die Hydraulikzylinder sind dabei derart vorgesehen, dass sie das Rotorblatt nicht beim Schwenken berühren. Optional können die Zylinder derart ausgelegt werden, dass auch einer der Zylinder das Rotorblatt halten könnte, wenn der zweite Zylinder ausfällt.

Falls ein Transportfahrzeug über ein hydraulisches Fahrwerk verfügt, dann können somit auch schräge Fahrbahnoberflächen ausgeglichen werden. Zur weiteren Erhöhung der Standsicherheit des Transportfahrzeugs können Gewichte 260 auf oder an dem Grundrahmen vorgesehen werden.

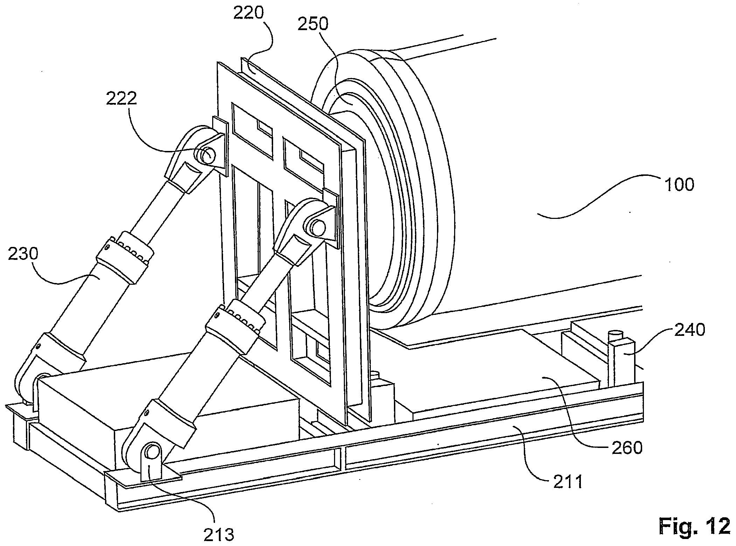

Fig. 12 zeigt eine perspektivische Ansicht eines Transportgestells gemäß einem zwölften Ausführungsbeispiel. Das Transportgestell weist wie in dem ersten bis elften Ausführungsbeispiel einen Grundträger 211 sowie einen Kippstuhl 220 auf. Während jedoch bei den Ausführungsbeispielen 1 bis 11 der Kippstuhl an einem Ende des Grundträgers befestigt ist, ist der Kippstuhl gemäß dem zwölften Ausführungsbeispiel nicht am Ende befestigt, sondern die Lager 213 für die Hydraulikzylinder 230 sind an einem Ende des Grundrahmens 210 befestigt. Während die Hydraulikzylinder 230 gemäß den Ausführungsbeispielen 1 bis 11 als Druckhydraulikzylinder ausgestaltet sind, sind die Hydraulikzylinder 230 gemäß dem zwölften Ausführungsbeispiel als Zughydraulikzylinder ausgestaltet. Die Ausgestaltung des Transportgestells gemäß dem zwölften Ausführungsbeispiel ist insbesondere für große Rotorblätter vorteilhaft, weil der Blattadapter nicht auf der gleichen Seite wie die Hydraulikzylinder vorgesehen ist, sondern auf der gegenüberliegenden Seite. Somit kann der Blattadapter größer ausgestaltet sein. Die Ausgestaltung des Transportgestells gemäß dem zwölften Ausführungsbeispiel ist vorteilhaft, weil somit eine Transportbreite von 3 m eingehalten werden kann und dennoch ausreichend Platz zur Aufnahme von Flanschen von größeren Rotorblättern vorgesehen ist. Somit werden die Hydraulikzylinder hinter dem Kippstuhl positioniert. Somit müssen die Hydraulikzylinder eine Zugkraft anstatt einer Druckkraft erzeugen.

Gemäß einem weiteren Ausführungsbeispiel, welches auf einem der ersten bis zwölften Ausführungsbeispiele beruhen kann, kann der Blattadapter 250 drehbar ausgestaltet sein, damit ein Rotorblatt beispielsweise zum Durchfahren einer Brücke für eine kurze Zeit um seine Längsachse gedreht wird. Dies kann dazu führen, dass die Transportbreite dann größer als 3 m ist. Da dies jedoch nur temporär erfolgt, um beispielsweise Brücken zu unterfahren, stellt dies kein größeres Problem dar.

Gemäß einem weiteren Ausführungsbeispiel kann der Kippstuhl drehbar auf dem Grundrahmen befestigt sein. Hierdurch können weitere flexiblere Verdrehmöglichkeiten des Rotorblattes vorgesehen werden.

Gemäß der Erfindung kann das Rotorblatt bis zu 40° verkippt werden. Das Transportgestell gemäß der Erfindung kann bei allen Standard-LKW-Einheiten verwendet werden.

Durch die erfindungsgemäße Adaptereinheit bzw. das erfindungsgemäße Transportgestell kann ein Transport von Rotorblättern einer Windenergieanlage oder Turmsegmenten auch bei sehr engen Kurven erfolgen, da durch Kippen des Kippstuhls ein gesamtes daran befestigtes Rotorblatt nach oben verschwenkt wird und somit keine Behinderung durch eine enge Kurve auftritt.

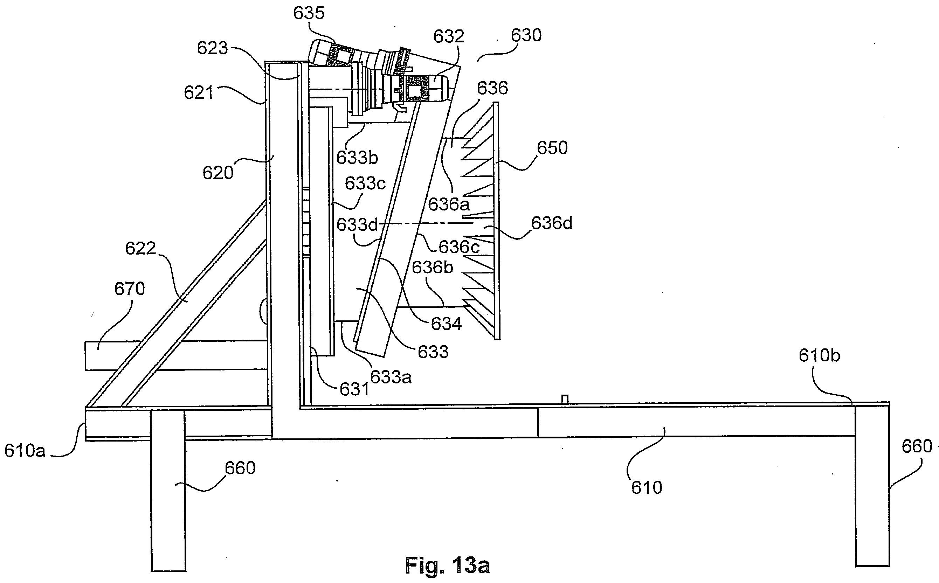

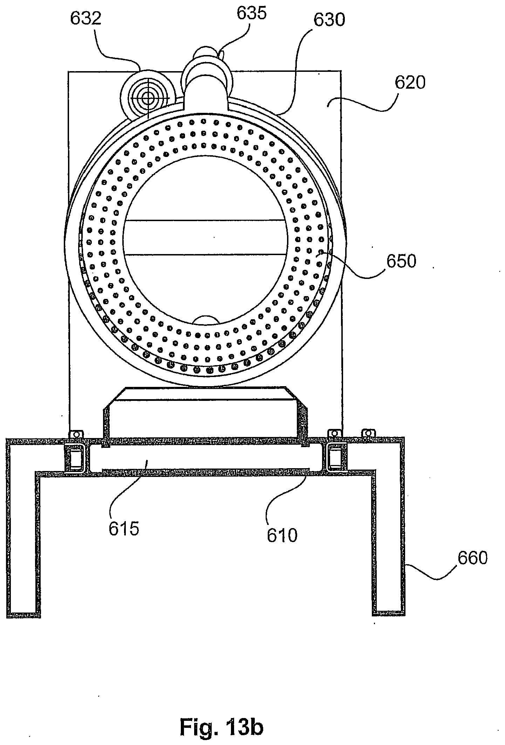

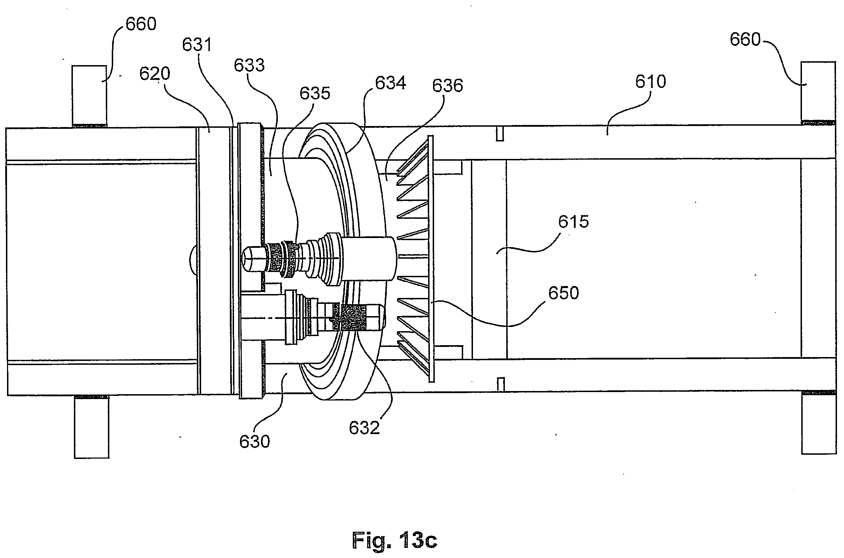

Fig. 13A bis 13C zeigen jeweils verschiedene Ansichten eines Transportgestells gemäß einem dreizehnten Ausführungsbeispiel. In Fig. 13A ist eine Seitenansicht des Transportgestells gemäß dem dreizehnten Ausführungsbeispiel, in Fig. 13B ist eine Frontansicht des Transportsystems gemäß dem dreizehnten Ausführungsbeispiel und in Fig. 13C ist eine Draufsicht auf das Transportgestell gemäß dem dreizehnten Ausführungsbeispiel gezeigt.

Das Transportgestell gemäß dem dreizehnten Ausführungsbeispiel weist einen Grundrahmen 610 optional mit Stützfüßen 660 zum Abstellen des Gestells sowie als Abstützung während der Fahrt auf. Der Grundrahmen 610 weist ein erstes Ende 610a und ein zweites Ende 610b auf. Im Bereich des ersten Endes 610a ist ein Aufnahmerahmen 620 zur Aufnahme einer Dreh-Verstelleinheit 630 vorgesehen. Der Aufnahmerahmen 620 kann durch Streben 622 mit dem ersten Ende 610a des Grundrahmens verbunden werden, um die Stabilität des Aufnahmerahmens zu erhöhen.

Optional können Ausgleichsgewichte 670 in oder an dem ersten Ende 610a des Grundrahmens 610 vorgesehen werden.

Der Aufnahmerahmen 620 ist vorzugsweise rechtwinklig zu dem Grundrahmen 610 ausgestaltet. Alternativ dazu kann der Aufnahmerahmen 620 auch einen anderen Winkel in Bezug zu dem Grundrahmen 610 aufweisen. Der Aufnahmerahmen 620 weist eine erste Seite 621 und eine zweite Seite 623 auf. Die erste Seite 621 ist zu dem ersten Ende 610a des Grundrahmens 610 gerichtet. Die zweite Seite 623 ist zu dem zweiten Ende 610b des Grundrahmens 610 gerichtet. An der ersten Seite 621 des Aufnahmerahmens 620 können die Streben 622 befestigt werden. An der zweiten Seite 623 des Aufnahmerahmens 620 kann eine Dreh-Verstelleinheit 630 vorgesehen sein. Die Dreh-Verstelleinheit 630 dient dazu, ein Rotorblatt einer Windenergieanlage aufzunehmen und die Ausrichtung des Rotorblattes zu verstellen, z.B. kann das Rotorblatt entlang seiner Längsachse gedreht werden und/oder das Rotorblatt zur Seite oder nach oben bewegt werden.

Im Gegensatz zum Stand der Technik und den ersten bis zwölften Ausführungsbeispielen erfolgt jedoch die Bewegung des Rotorblattes beispielsweise nach oben nicht über ein Verschwenken bzw. Kippen des Rotorblattes, welches an einem Kippstuhl befestigt ist.

Die Dreh-Verstelleinheit 630 ist über ihr erstes Ende 631 an dem zweiten Ende 623 des Aufnahmerahmens 620 befestigt. An dem ersten Ende 630a der Dreh-Verstelleinheit 630 ist ein erstes Drehlager 631 vorgesehen, welches z. B. parallel zu der Ebene des Aufnahmerahmens 620 vorgesehen ist. (Alternativ dazu kann die Ebene des Drehlagers auch in einem Winkel zu der Ebene des Aufnahmerahmens 620 ausgestaltet sein.)

Das erste Drehlager 631 kann durch einen ersten Antrieb 632 (beispielsweise ein Elektromotor) um die Drehachse des ersten Drehlagers 631 gedreht werden. An dem Drehlager 631 ist ein erster Abschnitt 633 der Dreh-Verstelleinheit 630 vorgesehen. Der erste Abschnitt 633 ist mit seinem ersten Ende mit dem Drehlager gekoppelt. Der erste Abschnitt 633 weist ferner ein erstes Ende 633a und ein zweites Ende 633b auf. Die Länge des ersten Endes 633a ist dabei kleiner als die Länge des zweiten Endes 633b, so dass die zweite Seite 633d nicht parallel zu der Drehebene des ersten Drehlagers 631 ausgestaltet ist. Insbesondere ist der Winkel zwischen der Drehebene des ersten Drehlagers 631 und der zweiten Seite 633d zwischen 5° und 25° oder zwischen 10° und 50°, z.B. zwischen 30° und 40°.

An der zweiten Seite 633d des ersten Abschnitts 633 ist ein zweites Drehlager 634 mit einer zweiten Drehebene und einer zweiten Drehachse vorgesehen. An dem zweiten Drehlager 634 ist ein zweiter Abschnitt 636 der Dreh-Verstelleinheit 630 vorgesehen. Dabei ist eine erste Seite 636c an dem zweiten Drehlager vorgesehen. Eine zweite Seite 636d des zweiten Abschnitts 636 dient zur Aufnahme eines Blattadapters 650, an welchem verschiedene Rotorblätter für Windenergieanlagen befestigt werden können.

Somit weist die Dreh-Verstelleinheit 630 ein erstes und zweites Drehlager 631, 634 auf, welche jeweils eine Drehebene aufweisen und wobei ein Winkel von *α* zwischen den beiden Drehebenen des ersten und zweiten Drehlagers 631, 634 vorhanden ist.

Der zweite Abschnitt 636 der Dreh-Verstelleinheit 630 weist ein erstes Ende 636a und ein zweites Ende 636b auf. Hierbei ist die Länge des ersten Endes 636a kleiner als die Länge des zweiten Endes 636b. Damit ist ein Winkel zwischen einer Ebene des Blattadapters 650 und der Drehebene des zweiten Drehlagers vorhanden. Optional entspricht dieser Winkel dem Winkel zwischen der Drehebene des ersten Drehlagers 631 und der zweiten Seite 633d des ersten Abschnitts 633.

Das zweite Drehlager kann über einen zweiten Antrieb (beispielsweise einen Elektromotor 635) gedreht werden.

In einem ersten Betriebszustand (in Fig. 13A gezeigt) ist die Ebene des Blattadapters 650 parallel zu der ersten Drehebene des ersten Drehlagers 631. In diesem Fall ist das zweite Ende 633b des ersten Abschnitts 633 oben angeordnet und das zweite Ende 633a ist unten angeordnet. Ferner ist das erste Ende 636a des zweiten Abschnittes 636 oben angeordnet und das zweite Ende 636b ist unten angeordnet. Hierbei bedeutet unten, der dem Grundträger zugewandten Seite und oben bedeutet, der dem Grundträger abgewandten Seite. In dem ersten Betriebszustand ist die Ebene des Blattadapters 650 somit im Wesentlichen parallel zu der ersten Drehebene des ersten Drehlagers 631.

In einem zweiten Betriebszustand wird der erste Abschnitt 633 um 180° gedreht, so dass das zweite Ende 633b nach unten weist und das erste Ende 633a nach oben weist. In diesem zweiten Betriebszustand weisen somit jeweils die zweiten Enden des ersten und zweiten Abschnittes 633, 636 nach unten und die beiden ersten Enden 633a, 636a weisen hierbei nach oben. In dem zweiten Betriebszustand ist die Ebene des Blattadapters 650 um den ersten Winkel *α*1 zu der Drehebene des ersten Drehlagers 631 geneigt. In diesem Fall erstreckt sich ein an dem Blattadapter 650 befestigtes Rotorblatt in einem Winkel zu dem Grundrahmen 610.

Selbstverständlich sind weitere Betriebszustände zwischen dem ersten und zweiten Betriebszustand möglich. Beispielsweise kann mittels des ersten Drehlagers 631 das Rotorblatt um seine Längsachse gedreht werden. Dies kann beispielsweise notwendig sein, wenn das Rotorblatt unterhalb einer Brücke transportiert werden soll. In einem derartigen Fall kann das Rotorblatt so gedreht werden, das es durch die Brücke passt. Anschließend kann es wieder zurückgedreht werden, damit es wieder unterhalb der maximalen Transportbreite ist.

Fig. 13B zeigt eine Ansicht des Transportgestells gemäß dem dreizehnten Ausführungsbeispiel. Das Transportgestell weist einen Grundrahmen 611 mit Stützfüßen 660 auf. Ferner weist der Grundrahmen einen Aufnahmerahmen 640 und eine Dreh-Verstelleinheit 630 auf. Die Dreh-Verstelleinheit 630 weist einen ersten und zweiten Antrieb 632, 635 sowie einen Blattadapter 650 zur Aufnahme von Rotorblättern auf.

Fig. 13C zeigt eine Ansicht von oben des Transportgestells gemäß einem dreizehnten Ausführungsbeispiel. Das Transportgestell weist einen Grundrahmen 610 mit Stützfüßen 660 auf. Das Transportgestell weist ferner einen Aufnahmerahmen 620 zur Aufnahme einer Dreh-Verstelleinheit 630 auf. Die Dreh-Verstelleinheit 630 weist ein erstes Drehlager 631 und ein zweites Drehlager 634 auf. Zwischen dem ersten und dem zweiten Drehlager ist ein erster Abschnitt 633 der Dreh-Verstelleinheit 630 vorgesehen. Zwischen dem zweiten Drehlager und einem Blattadapter 650 ist ein zweiter Abschnitt 636 der Dreh-Verstelleinheit vorgesehen.

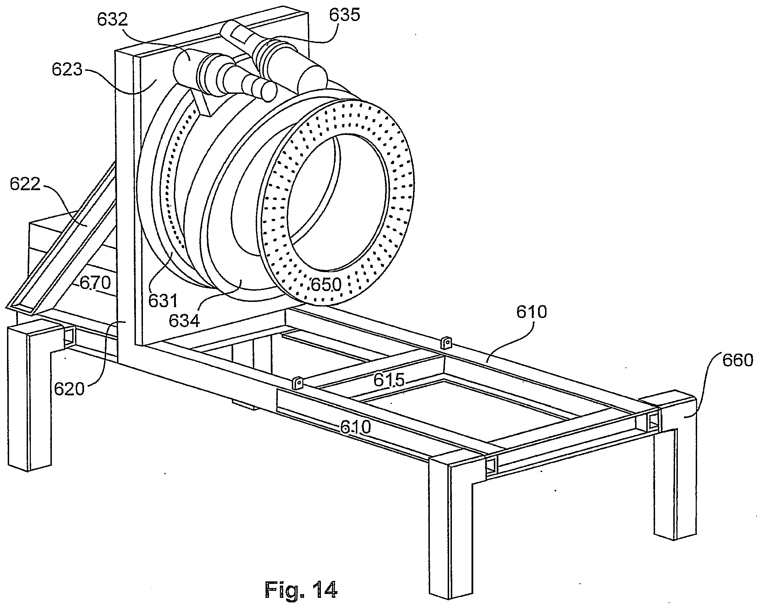

Fig. 14 zeigt eine perspektivische Ansicht eines Transportgestells gemäß einem vierzehnten Ausführungsbeispiel. Das Transportgestell gemäß dem vierzehnten Ausführungsbeispiel kann auf dem Transportgestell gemäß dem dreizehnten Ausführungsbeispiel beruhen. Das Transportgestell weist einen Grundrahmen 610 mit beispielsweise vier Stützfüßen 660 (optional) auf. Ferner können Querstreben 615 zwischen den beiden Längsstreben des Grundträgers vorgesehen sein. Der Grundrahmen 610 weist ebenfalls einen Aufnahmerahmen 620 auf, welcher beispielsweise in einem Winkel von 90° zu dem Grundträger 610 vorgesehen ist (ein anderer Winkel ist auch möglich). Das Transportgestell kann ferner optional mehrere Ausgleichsgewichte 670 aufweisen. Ferner weist das Transportgestell eine Dreh-Verstelleinheit 630 auf. Die Dreh-Verstelleinheit 630 weist ein erstes Drehlager 631 mit einer ersten Drehachse und einer ersten Drehebene und ein zweites Drehlager 634 mit einer zweiten Drehebene und einer zweiten Drehachse auf. Das erste Drehlager 631 kann über einen ersten Antrieb (beispielsweise einen Elektromotor) verstellt bzw, gedreht werden. Das zweite Drehlager 634 kann über einen zweiten Antrieb 635 (beispielsweise einen Elektromotor) gedreht werden. Zwischen dem ersten und dem zweiten Drehlager 631, 634 ist ein erster Abschnitt 633 der Verstelleinheit vorgesehen. Zwischen dem zweiten Drehlager 634 und dem Blattadapter 650 ist ein zweiter Abschnitt 636 vorgesehen.

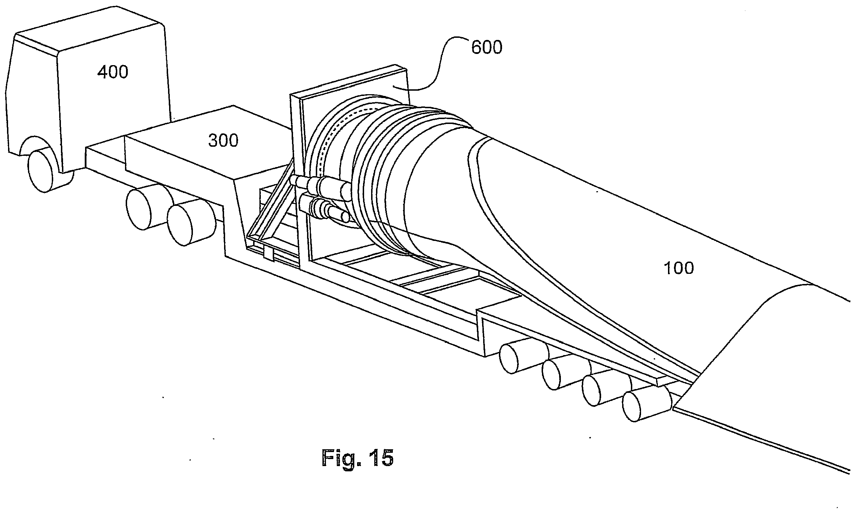

Fig. 15 zeigt eine perspektivische Ansicht eines Transporters mit einem Transportgestell gemäß einem fünfzehnten Ausführungsbeispiel und einem Rotorblatt. Ein LKW 400 zieht einen Auflieger 300, auf welchem das Transportgestell 600 vorgesehen ist. An dem Transportgestell ist ein Rotorblatt 100 befestigt. Das Transportgestell gemäß dem fünfzehnten Ausführungsbeispiel kann dem Transportgestell gemäß dem dreizehnten oder vierzehnten Ausführungsbeispiel entsprechen.

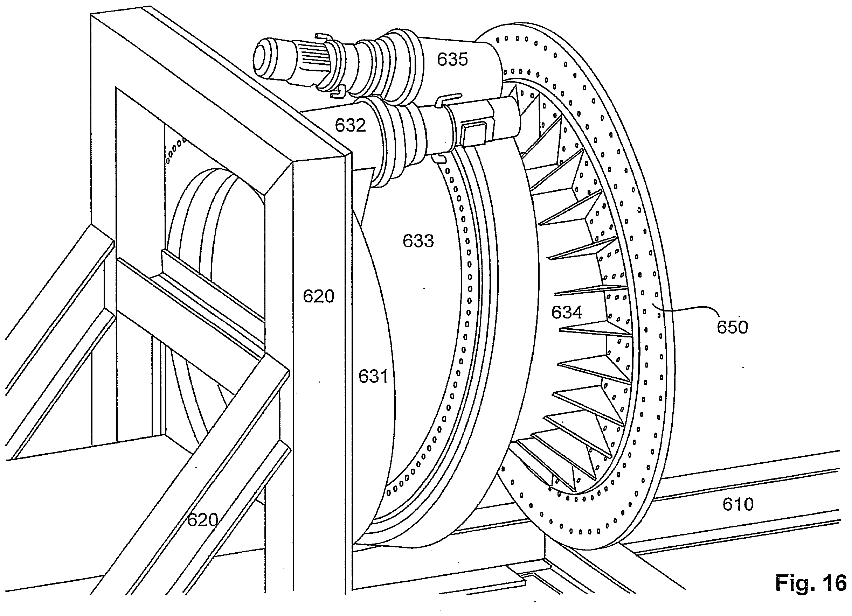

Fig. 16 zeigt eine perspektivische Ansicht der Dreh-Verstelleinheit 630 eines Transportgestells gemäß einem sechzehnten Ausführungsbeispiel. Das Transportgestell gemäß dem sechzehnten Ausführungsbeispiel kann dem Transportgestell gemäß dem vierzehnten oder fünfzehnten Ausführungsbeispiel entsprechen. Somit weist das Transportgestell einen Grundträger 610, einen Aufnahmerahmen 620 und eine Dreh-Verstelleinheit 630 auf. Die Dreh-Verstelleinheit 630 weist ein erstes Drehlager 631 und ein zweites Drehlager 634 auf. Zwischen dem ersten und zweiten Drehlager 631, 634 ist ein erster Abschnitt 633 und zwischen dem zweiten Drehlager 634 und einem Ende der Dreh-Verstelleinheit 630 ist ein zweiter Abschnitt 634 der Dreh-Verstelleinheit 630 vorgesehen. Das erste Drehlager 631 kann über einen ersten Antrieb 632 angetrieben werden und das zweite Drehlager 634 kann über einen zweiten Antrieb 635 angetrieben werden.

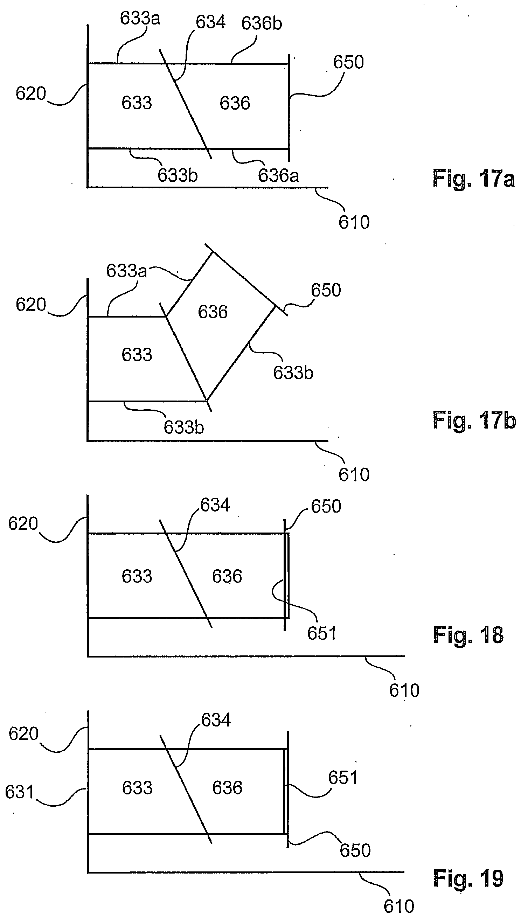

Figur 17A und 17B zeigen jeweils eine schematische Ansicht eines Transportgestells gemäß einem siebzehnten Ausführungsbeispiel. Das Transportgestell gemäß dem siebzehnten Ausführungsbeispiel kann auf dem Transportgestell gemäß dem vierzehnten oder fünfzehnten Ausführungsbeispiel beruhen. Das Transportgestell weist einen Grundträger bzw. Grundrahmen 610, einen Aufnahmerahmen 620 und eine Dreh-Verstelleinheit 630 auf. Die Dreh-Verstelleinheit 630 weist ein Drehlager 634 auf, welches in einem Winkel zu einer Grundebene vorgesehen ist, wobei die Grundebene durch den Grundträger bzw. den Grundrahmen 610 aufgespannt wird. Insbesondere ist die Drehebene des ersten Drehlagers 634 in einem Winkel von kleiner 90° vorgesehen. Die Dreh-Verstelleinheit 630 weist einen ersten Abschnitt 633 auf, welcher an dem Aufnahmerahmen 620 befestigt ist. Die Dreh-Verstelleinheit 630 weist einen zweiten Abschnitt auf, welcher zwischen dem Drehlager 634 und dem Blattadapter 650 vorgesehen ist.

In Figur 17A ist ein erster Betriebszustand gezeigt, hierbei ist die Ebene des Blattadapters 650 im Wesentlichen parallel zu der Ebene des Aufnahmerahmens 620. Damit kann auch die Ebene des Blattadapters 650 rechtwinklig zu der Grundebene vorgesehen sein.

In Figur 17B ist ein zweiter Betriebszustand gezeigt. Hierbei ist das erste Drehlager um 180° gedreht worden. In Figur 17A und 17B ist ein kürzeres Ende 633a des ersten Abschnittes oben vorgesehen und das längere Ende 633b ist unten vorgesehen. In Figur 17a ist das längere Ende 636b des zweiten Abschnittes oben vorgesehen und das kürzere Ende 636a ist unten vorgesehen. In der in Figur 17B gemäß dem zweiten Betriebszustand gezeigten Situation grenzt der erste kürzere Abschnitt 633a an den ersten kürzeren Abschnitt 636b des zweiten Abschnitts. Ebenso grenzt der längere Abschnitt 636b des ersten Abschnittes an das längere Ende 636b des zweiten Abschnittes. Somit ist ein Winkel zwischen der Ebene des Aufnahmerahmens und der Ebene des Blattadapters 650 vorgesehen. Entsprechend ist ein weiterer Winkel zwischen der Grundebene und der Ebene des Blattadapters vorgesehen, wobei dieser Winkel dem Winkel der Drehebene entspricht. D. h. in dem zweiten Betriebszustand gemäß Figur 17B ist die Ebene des Blattadapters parallel zu der Drehebene des Drehlagers 634.

Figur 18 zeigt eine schematische Darstellung eines Transportgestells gemäß einem achtzehnten Ausführungsbeispiel. Das Transportgestell gemäß dem achtzehnten Ausführungsbeispiel kann auf dem Transportgestell gemäß dem siebzehnten Ausführungsbeispiel beruhen. Zusätzlich zu der Dreh-Verstelleinheit gemäß dem siebzehnten Ausführungsbeispiel weist die Dreh-Verstelleinheit gemäß dem achtzehnten Ausführungsbeispiel ein Drehlager an seinem zweiten Ende, d. h. ein Drehlager an dem Blattadapter auf. Durch dieses Drehlager an dem unteren Bereich des Blattadapters 650 kann ein an dem Blattadapter befestigtes Rotorblatt entlang seiner Längsachse gedreht werden.

Figur 19 zeigt eine schematische Darstellung eines Transportgestells gemäß einem neunzehnten Ausführungsbeispiel. Das Transportgestell gemäß dem neunzehnten Ausführungsbeispiel kann auch dem Transportgestell gemäß dem siebzehnten und achtzehnten Ausführungsbeispiel bzw. einer Kombination daraus beruhen. Gemäß dem neunzehnten Ausführungsbeispiel ist ein Drehlager am Übergang zwischen dem Aufnahmerahmen 620 und dem ersten Abschnitt 633, ein zweites Drehlager am Übergang von dem ersten zum zweiten Abschnitt 633, 636 und ein drittes Drehlager ist am Übergang zwischen dem zweiten Abschnitt 636 und dem Blattadapter 650 vorgesehen.

Die Erfindung betrifft ein Transportfahrzeug zum Transport von Windenergieanlagen-Rotorblättern und/oder von Windenergieanlagen-Turmsegmenten. Das Transportfahrzeug weist ein Transportgestell 600 auf, wobei das Transportgestell 600 einen Grundrahmen bzw. einen Grundträger 610, einen mit dem Grundrahmen 610 in einem ersten Winkel fest verbundenen Aufnahmerahmen 620 und eine Dreh-Verstelleinheit 630 aufweist. Die Dreh-Verstelleinheit ist mit ihrem ersten Ende an dem Aufnahmerahmen 620 gekoppelt und an ihrem zweiten Ende ist ein Blattadapter 650 zur Aufnahme eines Rotorblattes oder eines Turmsegmentes gekoppelt. Der Aufnahmerahmen weist eine Aufnahmeebene auf. Die Dreh-Verstelleinheit weist mindestens ein erstes Drehlager 634 auf, wobei ein zweiter Winkel zwischen der Aufnahmeebene des Aufnahmerahmens und der ersten Drehebene des ersten Drehlagers vorgesehen ist. Dieser zweite Winkel ist ungleich 90° ± 10°.

## Patentansprüche

1. Transportfahrzeug zum Transport von Windenergieanlagen-Rotorblättern und/oder Turmsegmenten, mit
einem Transportgestell (600), wobei das Transportgestell (600) einen Grundrahmen (610), einen mit dem Grundrahmen (610) in einem ersten Winkel fest verbundenen Aufnahmerahmen (620) und eine Dreh-Verstelleinheit (630) aufweiset, welche mit einem ersten Ende an dem Aufnahmerahmen (620) befestigt ist und an ihrem zweiten Ende einen Blattadapter (650) zur Aufnahme eines Rotorblattes oder eines Turmsegmentes aufweist, **dadurch gekennzeichnet, dass** der Grundrahmen (610) eine Grundebene aufspannt,
wobei die Dreh-Verstelleinheit (630) mindestens ein erstes Drehlager (634) zwischen dem ersten und zweiten Ende aufweist,
wobei das Drehlager (634) relativ zum Aufnahmerahmen (620) drehbar ist und in einem Winkel zu der Grundebene vorgesehen ist,
wobei die Dreh-Verstelleinheit (630) durch Drehen des ersten Drehlagers in einer ersten Position verfahrbar ist, so dass das zweite Ende der Dreh-Versteileinhelt (630) in einer ersten Ebene ist, welche im Wesentlichen senkrecht zur Grundebene ist,
wobei die Dreh-Verstelleinheit (630) in eine zweite Position durch Drehen des ersten Drehlagers (634) verfahrbar ist, so dass das zweite Ende der Dreh-Versteileinheit (630) sich in einer zweiten Ebene befindet, die nicht senkrecht zu der Grundebene ist.

2. Transportfahrzeug nach Anspruch 1, wobei
die Dreh- Verstelleinheit (630) ein zweites Drehlager (631) aufweist,
wobei zwischen dem ersten und zweiten Drehlager (634, 631) ein erster Abschnitt (633) vorgesehen ist,
wobei zwischen dem ersten Drehlager (634) und dem Blattadapter (650) ein zweiter Abschnitt (634) vorgesehen ist.

3. Transportfahrzeug nach Anspruch 1, wobei
die Drehverstelleinheit (630) ein zweites Drehlager an ihrem zweiten Ende aufweist, wobei zwischen dem ersten und zweiten Drehlager (634, 631) ein erster Abschnitt (636) vorgesehen ist,
wobei zwischen dem ersten Drehlager (634) und dem Aufnahmerahmen (620) ein zweiter Abschnitt vorgesehen ist.

4. Transportfahrzeug nach Anspruch 1, 2 oder 3, wobei
der erste und zweite Abschnitt (633, 634) der Dreh-Verstelleinheit (630) jeweils ein erstes und zweites Ende (633a, 636a; 633b, 636b) aufweist, wobei die ersten Enden (633a, 636a) jeweils kürzer sind als die zweiten Enden (633b, 636b).

5. Transportfahrzeug nach Anspruch 1 oder 2, wobei
in einem ersten Betriebszustand das zweite Drehlager (631) derart drehbar ist, dass das erste Ende (633a) des ersten Abschnitts (633) nach unten zeigt und das erste Drehlager (634) derart drehbar ist, dass das zweite Ende (636b) nach unten zeigt, und
wobei in einem zweiten Betriebszustand das zweite Drehlager (631) derart drehbar ist, dass das zweite Ende (633b) nach unten zeigt und das erste Drehlager (634) derart drehbar ist, dass das zweite Ende (636b) nach unten zeigt, so dass die Ebene des Blattadapters (650) geneigt ausgestaltet ist.

## Claims

1. A transport vehicle for transporting wind power installation rotor blades and/or pylon segments, comprising
a transport support structure (600), wherein the transport support structure (600) has a main frame (610), a receiving frame (620) fixedly connected to the main frame (610) at a first angle, and a rotary displacement unit (630) which is fixed with its (a) first end to the receiving frame (620) and which at its second end has a blade adaptor (650) for receiving a rotor blade or a pylon segment,
**characterized in that**
the main frame (610) spans a main plane,
wherein the rotary displacement unit (630) has at least one first rotary mounting (634) between the first and second end,
wherein the rotary mounting (634) is rotatable relative to the receiving frame (620) and is arranged in an angle with respect to the main plane,
wherein the rotary displacement unit (630) can be displaced by rotating the first rotary mounting (634) into such that the second end of the rotary displacement unit (630) is in a first plane which is substantially orthogonal with the main plane,
wherein the rotary displacement unit (630) can be displaced by rotating the first rotary mounting (634) into a second position such that the second end of the rotary displacement unit (630) is in a second plane which is not orthogonal to the main plane.

2. A transport vehicle according to claim 1 wherein
the rotary displacement unit (630) has a second rotary mounting (631),
wherein a first portion (633) is provided between the first and second rotary mountings (634, 631),
wherein a second portion (634) is provided between the first rotary mounting (634) and the blade adaptor (650).

3. A transport vehicle according to claim 1 wherein
the rotary displacement unit (630) has a second rotary mounting at its second end,
wherein provided between the first and second rotary mountings (634, 631) is a first portion (636),
wherein a second portion is provided between the first rotary mounting (634) and the receiving frame (620).

4. A transport vehicle according to claim 1, claim 2 or claim 3 wherein
the first and second portions (633, 634) of the rotary displacement unit (630) respectively have a first and a second end (633a, 636a; 633b, 636b), wherein the first ends (633a, 636a) are each shorter than the second ends (633b, 636b).

5. A transport vehicle according to claim 1 or claim 2 wherein
in a first operating condition the second rotary mounting (631) is rotatable in such a way that the first end (633a) of the first portion (633) points downwardly and the first rotary mounting (634) is rotatable in such a way that the second end (636b) points downwardly, and
wherein in a second operating condition the second rotary mounting (631) is rotatable in such a way that the second end (633b) points downwardly and the first rotary mounting (634) is rotatable in such a way that the second end (636b) points downwardly so that the plane of the blade adaptor (650) is inclined.

## Revendications

1. Véhicule de transport pour le transport de pales de rotor d'éolienne et/ou segments de tour, avec
un bâti de transport (600), dans lequel le bâti de transport (600) présente un cadre de base (610), un cadre de réception (620) relié fixement au cadre de base (610) dans un premier angle et une unité de réglage de rotation (630) qui est fixée à une première extrémité sur le cadre de réception (620) et présente sur sa seconde extrémité un adaptateur de pale (650) pour la réception d'une pale de rotor ou d'un segment de tour,
**caractérisé en ce que**
le cadre de base (610) définit un plan de base,
dans lequel l'unité de réglage de rotation (630) présente au moins un premier palier rotatif (634) entre la première et seconde extrémité,
dans lequel le palier rotatif (634) peut être tourné par rapport au cadre de réception (620) et est prévu dans un angle par rapport au plan de base,
dans lequel l'unité de réglage de rotation (630) peut être déplacée, par rotation du premier palier rotatif, dans une première position de sorte que la seconde extrémité de l'unité de réglage de rotation (630) soit dans un premier plan qui est sensiblement perpendiculaire au plan de base,
dans lequel l'unité de réglage de rotation (630) peut être déplacée dans une seconde position par rotation du premier palier rotatif (634) de sorte que la seconde extrémité de l'unité de réglage de rotation (630) se trouve dans un second plan qui n'est pas perpendiculaire au plan de base.

2. Véhicule de transport selon la revendication 1, dans lequel
l'unité de réglage de rotation (630) présente un second palier rotatif (631),
dans lequel une première section (633) est prévue entre le premier et second palier rotatif (634, 631),
dans lequel une seconde section (634) est prévue entre le premier palier rotatif (634) et l'adaptateur de pale (650).

3. Véhicule de transport selon la revendication 1, dans lequel
l'unité de réglage de rotation (630) présente un second palier rotatif sur sa seconde extrémité, dans lequel une première section (636) est prévue entre le premier et second palier rotatif (634, 631),
dans lequel une seconde section est prévue entre le premier palier rotatif (634) et le cadre de réception (620).

4. Véhicule de transport selon la revendication 1, 2 ou 3, dans lequel
la première et seconde section (633, 634) de l'unité de réglage de rotation (630) présentent respectivement une première et seconde extrémité (633a, 636a ; 633b, 636b), dans lequel les premières extrémités (633a, 636a) sont respectivement plus courtes que les secondes extrémités (633b, 636b).

5. Véhicule de transport selon la revendication 1 ou 2, dans lequel,
dans un premier état de fonctionnement, le second palier rotatif (631) est rotatif de telle manière que la première extrémité (633a) de la première section (633) soit dirigée vers le bas et le premier palier rotatif (634) est rotatif de telle manière que la seconde extrémité (636b) soit dirigée vers le bas, et
dans lequel, dans un second état de fonctionnement, le second palier rotatif (631) est rotatif de telle manière que la seconde extrémité (633b) soit dirigée vers le bas et le premier palier rotatif (634) est rotatif de telle manière que la seconde extrémité (636b) soit dirigée vers le bas de sorte que le plan de l'adaptateur de pale (650) soit configuré de manière inclinée.
